# EUROPÄISCHE PATENTSCHRIFT

(11) **EP 3 056 448 B1**
(45) Veröffentlichungstag und Bekanntmachung des Hinweises auf die Patenterteilung: **16.08.2017**
(21) Anmeldenummer: 15155040.7
(22) Anmeldetag: 13.02.2015
(51) Int. Cl.: B65D 47/20, F16K 15/14, A47G 19/22, B65D 51/16

(54) **Trinkbehälter mit einem Trinkaufsatz**
Drinking vessel and a drink attachment
Récipient pour boire avec un appendice pour boire

(43) Veröffentlichungstag der Anmeldung: 17.08.2016
(73) Patentinhaber: MAPA GmbH, 27404 Zeven (DE)
(72) Erfinder: Löhn, Jürgen, DE-27419 Grosse Meckelsen (DE)
(74) Vertreter: Hauck Patentanwaltspartnerschaft mbB

(56) Entgegenhaltungen:
- WO-A1-2013/168243
- US-A- 5 706 973
- US-A1- 2006 037 976
- US-A1- 2009 090 006

## Beschreibung

Die Erfindung bezieht sich auf einen Trinkbehälter mit einem Trinkgefäß und einem Trinkaufsatz. Das Trinkgefäß kann insbesondere als Trinkflasche (Ernährungsfläschchen, Trinkbecher oder Ernährungsbeutel) und der Trinkaufsatz als Trinkhilfe (z.B. Ernährungstülle oder Trinkschnabel) oder als Trinkhalm gemäß europäischer Norm EN 14350-1 ausgestaltet sein.

Trinkgefäße haben einen Innenraum und einen Gefäßhals mit einer Gefäßöffnung, die durch den Gefäßhals hindurch einen Zugang zum Innenraum ermöglicht. Trinkaufsätze weisen eine Bodenwand, einen um die Bodenwand umlaufenden Ringflansch zur abdichtenden Befestigung am Rand der Gefäßöffnung mittels eines Befestigungsringes und ein von der Bodenwand nach außen vorstehendes Mundstück auf. Der Befestigungsring ist einteilig mit dem Ringflansch verbunden oder ist ein separates Bauteil, das den Ringflansch des Trinkaufsatzes übergreift, um ihn am Rand der Gefäßöffnung festzuhalten. Das Mundstück hat eine Trinköffnung an der Außenseite, die über einen Durchgangskanal mit der Innenseite des Mundstückes verbunden ist, sodass Flüssigkeit aus dem Innenraum durch den Durchgangskanal ausströmen kann.

In das Mundstück ist ein Saugventil integriert, das beim Anlegen eines Unterdruckes öffnet. Ferner ist in die Bodenwand ein Belüftungsventil integriert, das öffnet, wenn sich ein Unterdruck im Trinkgefäß aufbaut. Bevorzugt sind Mundstück, Bodenwand, Ringflansch und ggf. Befestigungsring einteilig aus hartem Kunststoff ausgebildet. Die Ventile sind Schlitzventile mit durch Spritzgießen hergestellten Grundkörpern aus Silikon, in die nachträglich mittels Messern oder durch Reißen mittels besonderer Vorrichtungen Schlitze eingearbeitet sind. Die Ventile sollen ein Auslaufen des Trinkbehälters verhindern. Nachteilig ist die aufwendige Herstellung der Schlitzventile. Ferner liegen die Ränder der Schlitze mit nur geringer Pressung aneinander, sodass trotz der Schlitzventile Flüssigkeit auslaufen kann. Zudem öffnet ein Schlitzventil bereits beim Anliegen eines geringeren Unterdrucks, als ein Kind beim natürlichen Stillen erzeugt. Für die Entwicklung des Kindes sollte ein Trinkbehälter günstiger sein, der den Verhältnissen beim Stillen näher kommt.

Ferner sind Trinkaufsätze mit einem Trinkhalm bekannt. Diese haben in der Bodenwand einen rohrförmigen Halter, in den ein Trinkhalm abdichtend eingesetzt ist. Ein oberer Abschnitt des Trinkhalmes steht über die Oberseite der Bodenwand vor und ein unterer Abschnitt ragt von der Unterseite der Bodenwand in das Trinkgefäß hinein, um beim Saugen am oberen Abschnitt das Getränk aus dem Trinkgefäß abzuziehen. Der Trinkhalm kann sich über einen konischen Flansch an einem Konus in der Bodenwand des Trinkhalmhalters abstützen. Der Konus der Bodenwand ist mit Belüftungslöchern versehen. Bei einem Unterdruck im Trinkgefäß kann der Flansch des Trinkhalmes von den Belüftungslöchern abheben, sodass Luft von außen nachströmen kann.

Der Trinkhalm kann beispielsweise durch Umknicken und Fixieren des geknickten Trinkhalmes mittels eines auf den Trinkaufsatz aufgeklemmten Deckels abgedichtet werden. Die Abdichtung durch Knicken des Trinkhalmes ist unsicher und verschleißanfällig. Ferner kann in den Trinkhalm ein Saugventil integriert sein. Das Saugventil ist durch eine Trennwand gebildet, die den Durchgang des Trinkhalmes versperrt und in die mittels Messer Schlitze eingearbeitet sind. Die Herstellung des Saugventils im Trinkhalm ist aufwendig und es besteht die Gefahr, dass dieses bei geringen Druckdifferenzen öffnet.

US5,706,973 A1 offenbart einen Trinkbehälter gemäß dem Oberbegriff des Anspruchs 1. Davon ausgehend liegt der Erfindung die Aufgabe zugrunde, einen weniger aufwendigen Trinkbehälter zu schaffen, der günstigere Herstellungseigenschaften hat, sicher abdichtet und ein Trinken ermöglicht, das dem natürlichen Stillen näher kommt.

Die Aufgabe wird durch einen Trinkbehälter mit den Merkmalen von Anspruch 1 gelöst. Vorteilhafte Ausgestaltungen des Trinkbehälters sind in Unteransprüchen angegeben.

Der erfindungsgemäße Trinkbehälter umfasst
- ein Trinkgefäß, das einen Innenraum und einen Gefäßhals mit einer Gefäßöffnung aufweist,
- einen Trinkaufsatz, der eine Bodenwand, mindestens einen Durchgangskanal mit einer Öffnung zum Innenraum und einer Öffnung zur Umgebung, einen Ventilsitz und Halteeinrichtungen zum lösbaren Halten des Trinkaufsatzes am Trinkgefäß aufweist,
- ein an dem Ventilsitz gehaltenes Ventilelement aus weichelastischem Material, das einen den Durchgangskanal versperrenden, plattenförmigen Grundkörper aufweist, in dem eine Durchgangsöffnung vorhanden ist, die im unverformten Zustand des Grundkörpers geöffnet ist und
- eine Klemmeinrichtung mit mindestens einer zum plattenförmigen Grundkörper senkrechten Klemmfläche, die auf den äußeren Rand des plattenförmigen Grundkörpers eine die Durchgangsöffnung schließende Klemmkraft ausübt.

Bei dem erfindungsgemäßen Trinkbehälter ist die Durchgangsöffnung des Ventilelements geöffnet, wenn das Ventilelement unverformt ist. Somit kann das Ventilelement mit geöffneter Durchgangsöffnung hergestellt werden, vorzugsweise durch Spritzgießen von Silikon, thermoplastischem Elastomer oder einem anderen weichelastischen Material. Infolgedessen ist die Herstellung des Ventilelements kostengünstig. Wenn das Ventilelement in den Trinkbehälter eingebaut ist, wird die Durchgangsöffnung durch die Klemmeinrichtung geschlossen. Hierfür übt die Klemmeinrichtung mit ihren Klemmflächen eine Klemmkraft auf den äußeren Rand des Grundkörpers aus, die ein Schließen der Durchgangsöffnung bewirkt. Im Einbauzustand öffnet das Ventilelement, wenn auf den beiden Seiten des plattenförmigen Grundkörpers unterschiedliche Drucke anliegen. Hierbei kann sich der plattenförmige Grundkörper zu der Seite mit dem geringeren Druck hin ausbiegen und die Durchgangsöffnung öffnen. Ein weiterer Vorteil der Erfindung besteht darin, dass die für das Öffnen in der Durchgangsöffnung erforderliche Druckdifferenz über die von der Klemmeinrichtung auf den Grundkörper ausgeübte Klemmkraft einstellbar ist. Das Ventilelement kann zum Verschließen einer Trinköffnung eines auslaufsicheren Trinkgefäßes oder als Belüftungsventil verwendet werden. Auch Kombinationen der beiden Verwendungen sind möglich. Vorzugsweise ist der Ventilsitz zugleich die Klemmeinrichtung für das Ventilelement. Beispielsweise ist das Ventilelement ein plattenförmiger Grundkörper, der in einen Ventilsitz eingeklemmt ist, wobei die äußere Kontur des Grundkörpers im unverformten Zustand von der inneren Kontur des Ventilsitzes abweicht und sich an diese durch Einklemmen anpasst. Alternativ ist die Klemmeinrichtung vom Ventilsitz getrennt. Beispielsweise ist die Klemmeinrichtung ein Ring, in den der Grundkörper eingeklemmt ist und der am Ventilsitz gehalten ist.

Gemäß einer bevorzugten Ausgestaltung hat die Klemmeinrichtung eine Klemmfläche mit einer kreisrunden Kontur und der Grundkörper einen äußeren Rand mit einer von einer kreisrunden Kontur abweichenden Kontur. Gemäß einer weiteren Ausgestaltung hat der Grundkörper einen äußeren Rand mit einer ovalen Kontur. Wenn die Klemmfläche mit der kreisrunden Kontur auf den Rand des Grundkörpers mit der ovalen Kontur einwirkt, wird die ovale Kontur zu einer kreisrunden Kontur verformt und hierbei die Durchgangsöffnung geschlossen.

Gemäß einer weiteren Ausgestaltung hat die Durchgangsöffnung eine Hauptausdehnungsrichtung senkrecht zur Hauptausdehnungsrichtung der ovalen Kontur. Der Grundkörper wird durch die kreisrunde Kontur der Klemmeinrichtung in Hauptausdehnungsrichtung der ovalen Kontur komprimiert und hierbei die Durchgangsöffnung geschlossen.

Gemäß einer bevorzugten Ausgestaltung ist die Durchgangsöffnung im unverformten Zustand des Grundkörpers linsenförmig. Im geschlossenen Zustand der Durchgangsöffnung liegen die beiden Ränder der Durchgangsöffnung abdichtend aneinander an.

Gemäß einer weiteren Ausgestaltung haben die Ränder der Durchgangsöffnung Konturen, die bei geöffneter Durchgangsöffnung bezüglich der Mittelebene des Grundkörpers geneigt sind und sich bei geschlossener Durchgangsöffnung aneinander abstützen, sodass sich der Grundkörper auf eine Seite der Mittelebene ausbiegt. Hierdurch kann eine Verformung des Ventilelements zu einer Seite der Mittelebene des Grundkörpers hin gesteuert werden. Dies ist vorteilhaft für die Verwirklichung eines definierten Öffnungs- und Schließdruckes des Ventilelements.

Gemäß einer weiteren Ausgestaltung weist der Grundkörper auf mindestens einer Seite mindestens eine nach oben oder unten vorstehende Rippe oder Steg auf, welche die auf den äußeren Rand des Grundkörpers wirkende Klemmkraft auf die Ränder der Durchgangsöffnung weiterleitet, um diese zu schließen. Durch die Rippe oder den Steg kann die auf die Ränder der Durchgangsöffnung wirkende Schließkraft verstärkt werden.

Gemäß einer bevorzugten Ausgestaltung ist die mindestens eine Rippe oder der mindestens eine Steg radial vom äußeren Rand auf das Zentrum des Grundkörpers gerichtet. Gemäß einer weiteren Ausgestaltung ist die mindestens eine Rippe oder der mindestens eine Steg senkrecht oder in einem Winkel zu einem Rand der Durchgangsöffnung ausgerichtet.

Gemäß einer weiteren Ausgestaltung hat das Ventilelement einen röhrchenförmigen Trägerkörper, dessen Durchgang von dem plattenförmigen Grundkörper versperrt ist. Vorzugsweise ist die Kontur des Trägerkörpers der Kontur des Grundkörpers geometrisch ähnlich. Hierbei kann die Kontur des Trägerkörpers gleiche Abmessungen wie der Grundkörper oder davon abweichende Abmessungen haben. Der Trägerkörper ist vorteilhaft zum Aufklemmen oder Einklemmen des Ventilelements auf oder in einen Ventilsitz des Trinkaufsatzes verwendbar. Hierbei kann der Ventilsitz als röhrchenförmiger Halter an der Unterseite der Bodenwand ausgebildet sein. Bei dieser Ausgestaltung bildet der Ventilsitz zugleich die Spanneinrichtung. Alternativ ist bei einem Ventilelement mit einem röhrchenförmigen Trägerkörper die Spanneinrichtung getrennt vom Ventilsitz ausgebildet, beispielsweise durch ein Röhrchen, das in den Trägerkörper eingeklemmt oder auf diesen aufgeklemmt ist.

Gemäß einer weiteren Ausgestaltung ist der Trinkaufsatz eine Trinkhilfe mit einem ein Trinkloch aufweisenden Trinkschnabel auf der Außenseite der Bodenwand und einem kommunizierend mit dem Trinkloch verbundenen, röhrchenförmigen Halter auf der Innenseite der Bodenwand und einem topfförmigen Ventilelement, bei dem der Trägerkörper die Seitenwand und der Grundkörper den Boden bildet und das auf das von der Bodenwand entfernte Ende des Halters aufgeklemmt oder in dieses eingeklemmt ist. Bei dieser Ausgestaltung ist der röhrenförmige Halter zugleich die Spanneinrichtung. Alternativ umfasst das Ventilelement zwei topfförmige Elemente, die entgegengesetzt gerichtet sind und den Grundkörper als gemeinsamen Boden aufweisen, wobei das obere topfförmige Element auf den röhrchenförmigen Halter aufgeklemmt oder in diesen eingeklemmt ist und das untere topfförmige Element das Ventilelement ist, dessen Seitenwand der Trägerkörper ist und in das ein Röhrchen eingeklemmt oder auf das ein Röhrchen aufgeklemmt ist. Bei dieser Ausgestaltung ist der röhrchenförmige Halter der Ventilsitz und das zusätzliche Röhrchen die Spanneinrichtung.

Gemäß einer weiteren Ausgestaltung ist auf der Innenseite der Bodenwand ein weiterer röhrchenförmiger Halter vorhanden, der mit einem Belüftungsloch in der Außenseite der Bodenwand kommunizierend verbunden ist und ein weiteres topfförmiges Ventilelement, bei dem der Trägerkörper die Seitenwand und der Grundkörper den Boden bildet, auf den weiteren Halter aufgeklemmt oder in diesen eingeklemmt. Hierdurch wird vorteilhaft ein Belüftungsventil in einer Trinkhilfe verwirklicht. Alternativ umfasst das Belüftungsventil zwei entgegengesetzt gerichtete topfförmige Elemente mit dem Grundkörper als gemeinsamen Boden und einen zusätzlichen Röhrchen als Spanneinrichtung, wie bei dem alternativen Ventilelement.

Gemäß einer weiteren Ausgestaltung ist das Ventilelement und das weitere Ventilelement einteilig über eine Lasche miteinander verbunden. Durch die Lasche sind die beiden Ventilelemente unverlierbar miteinander verbunden, wodurch die Handhabung der Ventilelemente erleichtert wird, insbesondere beim Montieren und Reinigen des Trinkbehälters.

Gemäß einer weiteren Ausgestaltung hat die Lasche auf der Oberseite eine Versteifungsrippe und/oder auf der Unterseite eine Greifrippe. Hierdurch wird die Handhabung der Ventilelemente weiter erleichtert.

Gemäß einer weiteren Ausgestaltung umfasst ein mittlerer Abschnitt eines Trinkhalmes den Trägerkörper und ist die Spanneinrichtung ein röhrchenförmiger Halter an der Unterseite der Bodenwand, in den der mittlere Abschnitt des Trinkhalmes eingesetzt ist, wobei ein unterer Abschnitt des Trinkhalmes in den Innenraum des Trinkgefäßes hinein vorsteht und ein oberer Abschnitt des Trinkhalmes auf der Außenseite des Trinkaufsatzes nach außen vorsteht. Hierdurch wird vorteilhaft ein Trinkbehälter mit einem Trinkhalm (*Straw*) verwirklicht.

Gemäß einer weiteren Ausgestaltung hat der Trinkhalm am unteren Ende eine Aufweitung, in oder auf die ein Röhrchen eingeklemmt oder aufgeklemmt ist, das den unteren Abschnitt des Trinkhalms bildet. Diese Ausgestaltung ist vorteilhaft für die Montage des Trinkhalmes. Zudem kann durch Ausführungen eines Röhrchens aus einem harten Material sichergestellt werden, dass die untere Öffnung des Röhrchens ihre Position im Trinkgefäß beibehält, was vorteilhaft für die Entleerung des Trinkbehälters ist.

Gemäß einer anderen Ausgestaltung umfasst ein mittlerer Abschnitt eines Trinkhalmes den Trägerkörper, der in einem röhrchenförmigen Halter gehalten ist, wobei die Spanneinrichtung ein Röhrchen ist, das in den mittleren Abschnitt eingeklemmt oder auf diesen aufgeklemmt ist und einen unteren Abschnitt des Trinkhalmes bildet, der in den Innenraum hinein vorsteht und steht ein oberer Abschnitt des Trinkhalmes nach außen vom Trinkaufsatz vor. Bei dieser Ausgestaltung wird die Spanneinrichtung durch das Röhrchen verwirklicht.

Gemäß einer weiteren Ausgestaltung ist der röhrchenförmige Halter unten mit einem nach oben sich erweiternden Dichtabschnitt des Trinkaufsatzes verbunden und hat der Trinkhalm einen nach oben sich erweiternden Flansch und in einem Abstand oberhalb des Flansches einen umlaufenden Vorsprung, wobei der Flansch im Einbauzustand des Trinkhalmes abdichtend an der Unterseite des Dichtabschnittes anliegt und der Vorsprung sich am oberen Rand des Halters abstützt. Hierdurch wird eine Fixierung des Trinkhalmes im Trinkaufsatz erreicht, die vorteilhaft für die Montage und Demontage ist. Gemäß einer weiteren Ausgestaltung ist der Dichtabschnitt und/oder der Flansch konisch.

Gemäß einer weiteren Ausgestaltung weist der Dichtabschnitt mindestens eine Belüftungsöffnung auf, die sich von der Außenseite der Bodenwand bis zur Innenseite der Bodenwand erstreckt und die von dem Flansch abgedeckt ist, wenn im Innenraum kein Unterdruck herrscht und die vom Flansch freigegeben wird, wenn im Innenraum ein Unterdruck herrscht. Hierdurch wird auf einfache Weise ein Belüftungsventil verwirklicht.

Gemäß einer weiteren Ausgestaltung ist das Ventilelement aus Silikon oder thermoplastischem Elastomer hergestellt.

Gemäß einer weiteren Ausgestaltung ist das Ventilelement einteilig. Gemäß einer weiteren Ausgestaltung ist der Trinkhalm einteilig.

Die Erfindung wird nachfolgend anhand der anliegenden Zeichnungen von Ausführungsbeispielen näher erläutert. In den Zeichnungen zeigen:
Fig. 1 einen Trinkbehälter mit Trinkaufsatz in Form einer Trinkhilfe und Ventilelementen für Verschüttsicherung und Belüftung in einem Vertikalschnitt;
Fig. 2 Ventilelemente desselben Trinkbehälters im unverformtem Zustand im Vertikalschnitt;
Fig. 3 Ventilelemente desselben Trinkbehälters im unverformten Zustand in der Draufsicht;
Fig. 4 Trinkbehälter mit einem einen Trinkhalm aufweisenden Trinkaufsatz in einem Vertikalschnitt;
Fig. 5 Trinkhalm desselben Trinkbehälters in unverformtem Zustand in einem vergrößerten vertikalen Teilschnitt;
Fig. 6 Grundkörper desselben Trinkhalms im unverformtem Zustand in der Draufsicht;
Fig. 7 derselbe Trinkhalm in verformtem Zustand in einem vergrößerten vertikalen Teilschnitt;
Fig. 8 derselbe Grundkörper in verformtem Zustand in der Draufsicht;
Fig. 9 eine alternative Ausführung des Trinkhalmes mit dem Grundkörper an einer Aufweitung zum Einklemmen oder zum Aufklemmen eines Röhrchens in unverformtem Zustand im Vertikalschnitt;
Fig. 10 derselbe Trinkhalm im unverformtem Zustand in der Unteransicht,
Fig. 11 derselbe Trinkhalm mit eingeklemmten Röhrchen in Unteransicht;
Fig. 12 derselbe Trinkhalm mit aufgeklemmten Röhrchen in Unteransicht,
Fig. 13 ein alternatives Ventilelement im unverformten Zustand im Vertikalschnitt;
Fig. 14 dasselbe Ventilelement im unverformten Zustand in der Draufsicht.

Die Angaben "oben" und "unten" sowie "horizontal" und "vertikal" beziehen sich in dieser Anmeldung auf eine Ausrichtung des Trinkbehälters, bei der der Gefäßhals vertikal ausgerichtet ist, der Trinkaufsatz oben und das Trinkgefäß unten angeordnet ist.

Ferner sind bei der nachfolgenden Erläuterung verschiedene Ausführungsbeispiele Bauteile mit derselben Bezeichnung mit übereinstimmenden Bezugsziffern versehen.

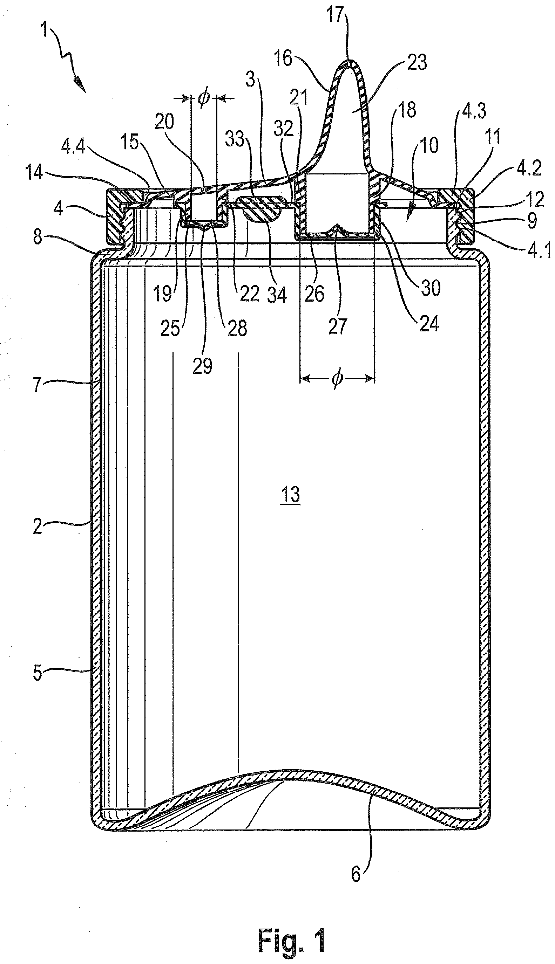

Gemäß Fig. 1 weist ein Trinkbehälter 1 ein Trinkgefäß 2 in Form einer Trinkflasche und einen Trinkaufsatz 3 in Form einer Ernährungstülle aus hartem Kunststoff und einen Schraubring 4 zum Befestigen des Trinkaufsatzes 3 am Trinkgefäß 2 auf.

Der Schraubring 4 hat ein Innengewinde 4.1 in einem zylindrischen Mantelteil 4.2. Der obere Rand des Mantelteils 4.2 ist mit einem nach innen vorstehenden Schraubringflansch 4.3 verbunden. Der Schraubringflansch 4.3 umgrenzt eine kreisrunde Öffnung 4.4 des Schraubrings 4.

Das Trinkgefäß 1 hat einen länglichen Flaschenkörper 5 mit einem Flaschenboden 6 und einer hülsenförmigen Flaschenseitenwand 7. Am oberen Ende der Flaschenseitenwand 7 hat das Trinkgefäß 2 eine Schulter 8, von deren Innenumfang ein zylindrischer Gefäßhals 9 (Flaschenhals) hochsteht. Der Flaschenhals 9 umgibt eine kreisrunde Gefäßöffnung 10.

Die obere Stirnfläche des Flaschenhalses 9 bildet einen kreisringförmigen Öffnungsrand 11, der die Gefäßöffnung 10 umgibt. Der Flaschenhals 9 trägt am Außenumfang ein Außengewinde 12.

Das Trinkgefäß 2 umgrenzt einen Innenraum 13, der mit einem Getränk gefüllt werden kann.

Der Trinkaufsatz 3 weist einen kreisringscheibenförmigen Ringflansch 14 auf. Dieser ist an seinem umlaufenden, inneren Rand mit einer konischen oder kuppelförmigen Bodenwand 15 verbunden. Von der Bodenwand 15 steht nach oben ein Mundstück 16 vor, das sich nach oben allmählich verjüngt. Das Mundstück 16 ist im Wesentlichen kegelförmig und hat in jedem Horizontalschnitt eine ovale Form. Das Mundstück 16 ist exzentrisch auf der Bodenwand 15 in einem kurzen Abstand vom Ringflansch 14 angeordnet.

Der Trinkaufsatz 3 ist mit der kuppelförmigen Bodenwand 15 und dem Mundstück 16 in die Öffnung 4.4 des Schraubrings 4 eingesetzt. Der Schraubringflansch 4.3 übergreift den Ringflansch 14. Durch Festschrauben des Schraubringes mit dem Innengewinde 4.1 auf dem Außengewinde 12 wird der Ringflansch 14 mit der Unterseite abdichtend auf dem Öffnungsrand 11 fixiert.

Im Ausführungsbeispiel sind Trinkaufsatz 3 und Schraubring 4 verschiedene Bauteile, die zusammengesetzt und am Trinkbehälter 1 fixiert werden. Die Erfindung umfasst auch alternative Ausgestaltungen, bei denen Trinkaufsatz 3 und Schraubring 4 einteilig ausgebildet sind, sodass sie nicht montiert und bei der Reinigung demontiert werden müssen. Ein weichelastischer Trinkaufsatz 3 und ein Schraubring 4 aus hartem Kunststoff können beispielsweise durch ein Mehrkomponenten-Spritzgießverfahren als einteiliges Bauteil hergestellt werden. Bei einteiliger Ausführung von Trinkaufsatz 3 und Schraubring 4 kann der Schraubringflansch 4.3 bzw. der Ringflansch 14 zumindest teilweise entfallen und der Trinkaufsatz 3 direkt und mit glatten Übergängen an den Schraubring 4 angebunden werden.

Das Mundstück 16 hat am oberen Ende eine Trinköffnung 17, die von einem oder mehreren Trinklöchern gebildet ist.

Von der Unterseite der Bodenwand 15 steht als Ventilsitz und Klemmeinrichtung ein röhrchenförmiger Halter 18 nach unten vor. Der Halter 18 ist unterhalb des Mundstückes 16 angeordnet, wobei sich der Halter 18 in das Mundstück 16 hinein öffnet. Der Halter 18 steht bezüglich des Ringflansches 14 nach unten vor.

Diametral gegenüber dem Halter 18 steht als weiterer Ventilsitz und weitere Klemmeinrichtung ein weiterer röhrchenförmiger Halter 19 von der Unterseite der Bodenwand 15 vor. Oberhalb des weiteren Halters 19 hat die Bodenwand 15 ein Belüftungsloch 20. Innen- und Außendurchmesser des weiteren Halters 19 sind kleiner als die entsprechenden Durchmesser des Halters 18. Der Halter 18 und der weitere Halter 19 haben jeweils eine kreiszylindrische Geometrie. Ferner hat der Halter 18 am Außenumfang eine Außenstufe 21 und der weitere Halter 19 am Außenumfang eine weitere Außenstufe 22, die in derselben horizontalen Ebene angeordnet sind.

Der Trinkaufsatz 3 weist einen Durchgangskanal 23 auf, der sich von der Trinköffnung 17 bis zum unteren Ende des Halters 18 erstreckt.

Außen auf den Halter 18 ist ein Ventilelement 24 und außen auf den weiteren Halter 19 ist ein weiteres Ventilelement 25 aufgeklemmt. Das Ventilelement 24 weist einen plattenförmigen Grundkörper 26 mit einer Durchgangsöffnung 27 und das weitere Ventilelement 25 einen weiteren plattenförmigen Grundkörper 28 mit einer weiteren Durchgangsöffnung 29 auf.

Der plattenförmige Grundkörper 26 ist am äußeren Rand einteilig mit einem röhrchenförmigen Trägerkörper 30 des Ventilelements 24 verbunden. Der weitere plattenförmige Grundkörper 28 ist am äußeren Rand ebenfalls einteilig mit einem weiteren röhrchenförmigen Trägerkörper 31 verbunden.

Der röhrchenförmige Trägerkörper 30 und der weitere röhrchenförmige Trägerkörper 31 sind am oberen Rand über eine streifenförmige Lasche 32 miteinander verbunden. Die Lasche 32 hat an der Oberseite eine Versteifungsrippe 33 und an der Unterseite eine Greifrippe 34.

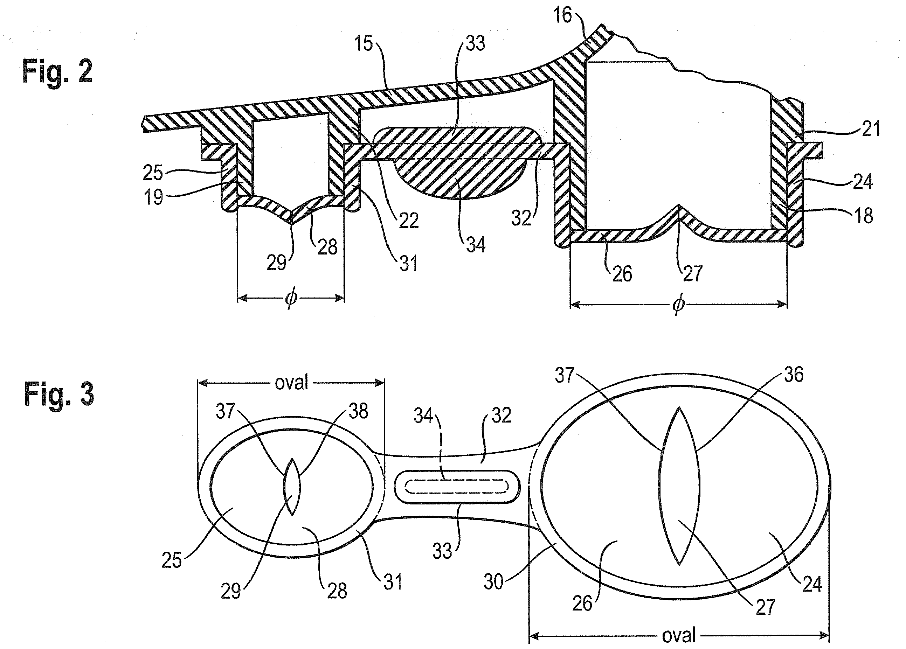

Gemäß Fig. 3 sind die Durchgangsöffnung 27 und die weitere Durchgangsöffnung 29 geöffnet, wenn die Ventilelemente 24, 25 nicht auf den Halter 18 und den weiteren Halter 19 aufgeklemmt sind. Die Durchgangsöffnung 27 und die weitere Durchgangsöffnung 29 sind jeweils linsenförmig. Die Ränder 35, 36 der Durchgangsöffnung 27 sind angeschrägt, wobei ihr Abstand voneinander nach unten zunimmt. Die Ränder 37, 38 der weiteren Durchgangsöffnung 29 sind ebenfalls abgeschrägt, wobei ihr Abstand voneinander nach oben zunimmt.

Der Grundkörper 26 und der Trägerkörper 30 haben jeweils eine geometrisch ähnliche äußere Kontur, die im Beispiel elliptisch ist. Die Haupt- und Nebenachsen der Kontur sind im Beispiel Symmetrieachsen der Durchgangsöffnung 27. Die Hauptausdehnungsrichtung der Durchgangsöffnung 27 ist senkrecht zur Hauptachse der Ellipse angeordnet.

Der weitere Grundkörper 28 und der weitere Trägerkörper 31 haben ebenfalls geometrisch ähnliche äußere Konturen, die im Beispiel elliptisch sind. Die Haupt- und Nebenachsen der Kontur sind zugleich Symmetrieachsen der weiteren Durchgangsöffnung 29. Die Hauptausdehnungsrichtung der weiteren Durchgangsöffnung 29 ist senkrecht zur Hauptachse der Ellipse ausgerichtet.

Das Ventilelement 24 und das weitere Ventilelement 25 werden in der in Fig. 3 gezeigten Konfiguration aus Silikon oder thermoplastischem Elastomer spritzgegossen.

Die Ventilanordnung 39 wird bis zur Anlage der Trägerelemente 30, 31 an den Außenstufen 21, 22 auf die Halter 18, 19 aufgeklemmt.

Beim Aufklemmen der Ventilanordnung 39 mit dem Ventilelement 24 auf den Halter 18 und dem weiteren Ventilelement 25 auf dem weiteren Halter 19 werden die Grundkörper 26, 28 in Richtung der Nebenachsen gedehnt und in Richtung der Hauptachsen komprimiert. Infolgedessen schließen sich die Durchgangsöffnung 27 und die weitere Durchgangsöffnung 29. Hierbei legen sich die Ränder 35, 36 der Durchgangsöffnung aneinander an und biegt sich der Grundkörper 26 infolge der Neigung der Ränder 35, 36 etwas hoch. Ferner liegen die Ränder 37, 38 der weiteren Durchgangsöffnung 29 aneinander an und infolge ihrer Neigung biegt sich der weitere Grundkörper 28 etwas nach unten aus. In diesem vorgespannten Zustand sind das Ventilelement 24 und das weitere Ventilelement 25 geschlossen. Diese Situation ist in Fig. 1 und 2 gezeigt.

Beim Saugen am Mundstück 16 öffnet sich die Durchgangsöffnung 27 infolge des oberhalb des Grundkörpers 26 herrschenden Unterdrucks und Flüssigkeit kann aus dem Trinkbehälter 1 ausströmen. Wenn der Unterdruck im Innenraum 13 ansteigt, öffnet sich die weitere Durchgangsöffnung 29 infolge des unterhalb des weiteren Grundkörpers 28 anstehenden Unterdrucks und ein Druckausgleich mit Umgebung erfolgt.

Wenn nicht am Mundstück 16 gesaugt wird, schließen sich die Durchgangsöffnungen 27, 29 wieder. Hierdurch wird das Getränk im Trinkbehälter 1 geschützt und verhindert, dass dieses unbeabsichtigt vergossen wird.

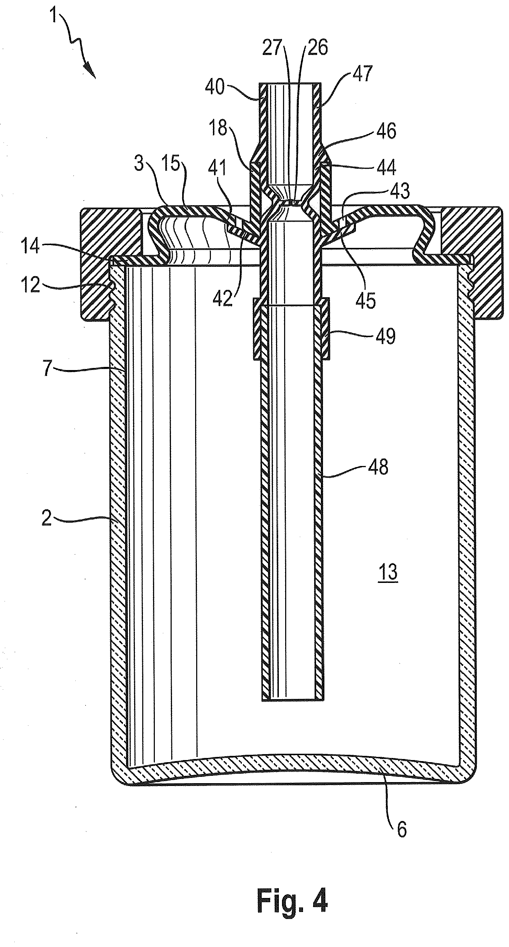

Gemäß Fig. 4 weist ein Trinkgefäß 1 mit einem Trinkhalm 40 einen Trinkaufsatz 3 mit einem kreisringscheibenförmigen Ringflansch 14 und einer mit dem inneren Rand des Ringflansches 14 verbundenen, kuppelförmigen Bodenwand 15 auf. Die Bodenwand 15 hat im Zentrum einen zum Innenraum 13 hin sich verjüngenden Konus 41. Die Unterseite des Konus 41 bildet einen sich nach oben konisch erweiternden Dichtabschnitt 42. Der innere Rand des Konus 41 ist mit einem hochstehenden, röhrchenförmigen Halter 18 verbunden.

In dem Konus 41 sind Belüftungsöffnungen 43 vorhanden, die sich von der Außenseite bis zur Innenseite der Bodenwand 15 erstrecken.

Die vorstehenden Elemente des Trinkaufsatzes 1 sind in einem einteiligen Bauteil aus Kunststoff ausgebildet.

In dem Halter 18 ist ein mittlerer Abschnitt 44 des Trinkhalmes 40 gehalten. Der mittlere Abschnitt 44 weist einen röhrchenförmigen Trägerkörper 30 auf, in dem ein plattenförmiger Grundkörper 26 mit Durchgangsöffnung 27 angeordnet ist. Ferner weist der mittlere Abschnitt 43 einen konischen, sich nach oben erweiternden Flansch 45 am Außenumfang auf. Oberhalb des Flansches 45 ist am Außenumfang des mittleren Abschnittes 44 ein kleiner Vorsprung 46 vorhanden, der im Beispiel konisch ausgebildet ist. Die Unterseite des Vorsprunges 46 bildet einen Anschlag.

An den mittlere Abschnitt 44 schließt sich oben ein röhrchenförmiger oberer Abschnitt 47 des Trinkhalmes 40 an und unten entweder ein röhrchenförmiger unterer Abschnitt 48 oder eine Aufweitung 49, in die ein Röhrchen 48 eingesteckt ist, das einen unteren Abschnitt des Trinkhalmes bildet.

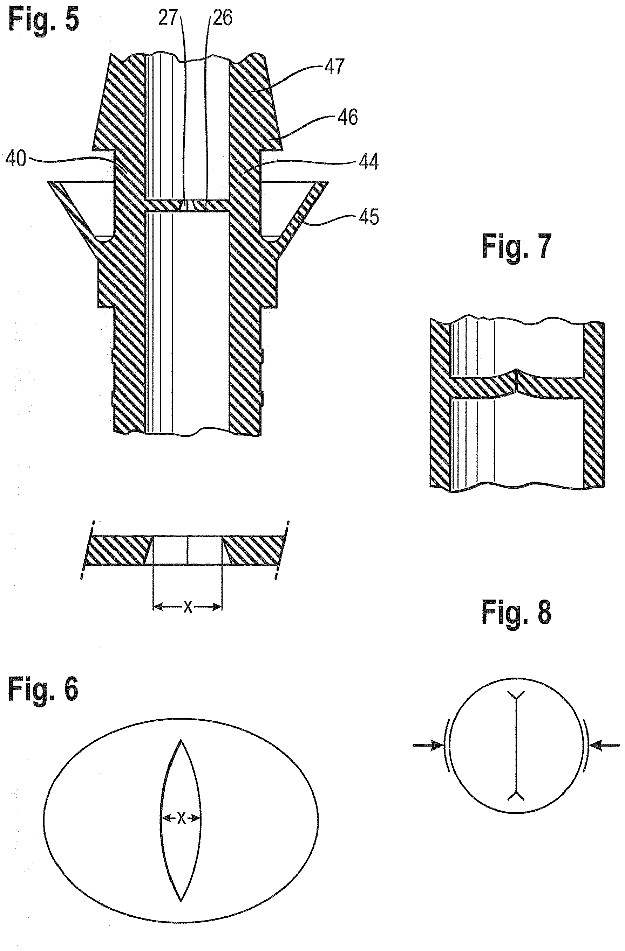

Gemäß Fig. 5 und 6 ist die Durchgangsöffnung 27 geöffnet, wenn der Trinkhalm 40 unverformt ist. Im unverformtem Zustand hat der Grundkörper 26 wiederum eine elliptische Außenkontur. Die linsenförmige Durchgangsöffnung 27 ist mit ihrer Hauptausdehnungsrichtung auf der Nebenachse und senkrecht zur Hauptachse der Ellipse ausgerichtet. Der Trinkhalm 40 gemäß Fig. 4 bis 8 wird im geöffneten Zustand der Durchgangsöffnung 27 aus Silikon, thermoplastischem Elastomer oder einem anderen weichelastischen Kunststoff spritzgegossen.

Zumindest der mittlere und obere Abschnitt 44, 47 des Trinkhalmes 40 sind vorzugsweise einteilig aus Silikon, thermoplastischem Elastomer oder aus einem anderen weichelastischen Material hergestellt. Bei Ausführung durch ein separates Röhrchen kann der untere Abschnitt 48 des Trinkhalmes 40 auch aus einem harten Kunststoff hergestellt sein.

Für den Einbau wird der obere Teil des Trinkhalmes 40 von unten in den Halter 18 eingesetzt, der Vorsprung 46 durch den Halter 18 hindurchbewegt wird, bis er mit der Unterseite am oberen Rand des Halters 18 anliegt und der Flansch 45 an der Unterseite des Dichtabschnittes 41 anliegt.

Im Einbauzustand passen sich die Außenkontur des mittleren Abschnittes 44 und des Grundkörpers 26 an die kreisrunde Innenkontur des Halters 18 an, sodass sich die Durchgangsöffnung 27 schließt. Die Ränder der Durchgangsöffnung 27 sind wiederum zur Vertikalen geneigt, sodass sich der Grundkörper 26 im Bereich der Durchgangsöffnung 27 im geschlossenen Zustand etwas nach oben hochwölbt.

Beim Saugen am Trinkhalm 40 öffnet die Durchgangsöffnung 27 infolge des oberhalb des Grundkörpers 26 herrschenden Unterdruckes. Wenn sich im Innenraum 13 ein Unterdruck aufbaut, biegt sich der Flansch 45 etwas nach unten vom Dichtabschnitt 42 weg und erfolgt durch die Belüftungsöffnungen 43 ein Druckausgleich mit Umgebung.

Wenn nicht gesaugt wird, schließen die Durchgangsöffnung 27, dichtet der Flansch 45 die Belüftungsöffnungen 43 ab und ist das Getränk ist von der Umgebung getrennt Und gegen unbeabsichtigtes Auslaufen geschützt.

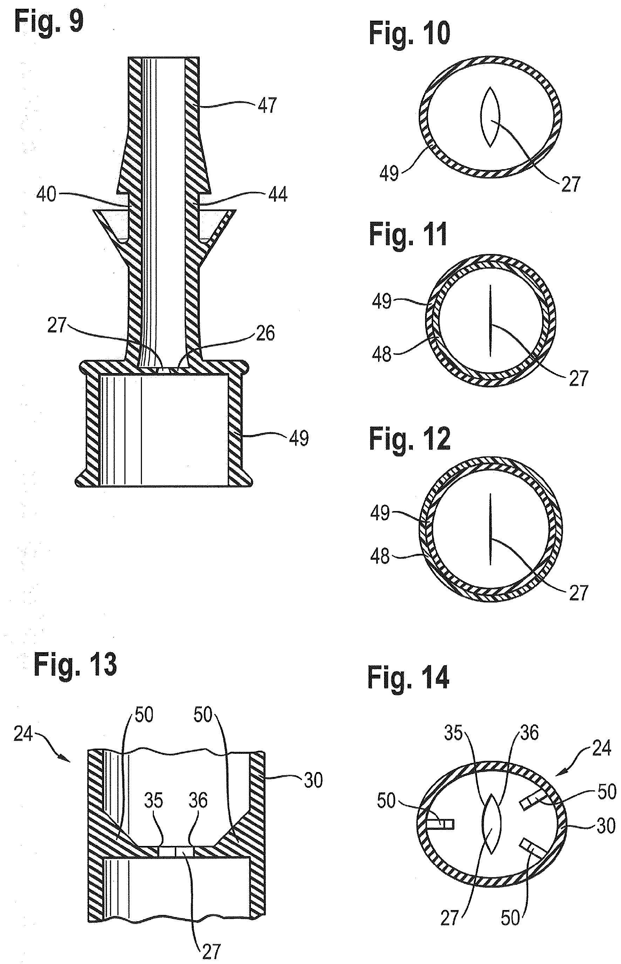

Der Trinkhalm 40 von Fig. 9 bis 12 unterscheidet sich von dem Vorbeschriebenen dadurch, dass der plattenförmige Grundkörper 26 mit der Durchlassöffnung 27 unterhalb des mittleren Abschnittes 44 als Boden einer Aufweitung 49 ausgebildet ist. Der Grundkörper 26 hat im unverformtem Zustand eine ovale Außenkontur. Wenn ein Röhrchen mit kreisrunder Kontur in die Aufweitung 49 eingeklemmt oder auf diese aufgeklemmt wird, nimmt der Boden der Aufweitung 49 ebenfalls eine kreisförmige Kontur an und schließt sich die Durchgangsöffnung 27, wie in Fig. 11 und 12 gezeigt. Von diesem Zustand ausgehend, kann die Durchgangsöffnung 27 durch Saugen am Trinkhalm 40 geöffnet werden. Die Belüftung des Trinkbehälters 1 erfolgt wie bei dem vorherigen Ausführungsbeispiel.

Der Trinkhalm 40 gemäß Fig. 9 bis 12 wird im geöffneten Zustand aus Silikon, thermoplastischem Elastomer oder einem anderen weichelastischen Kunststoff spritzgegossen.

In den Fig. 13 und 14 ist ein alternatives Ventilelement 24 gezeigt, das auf der Oberseite des Grundkörpers 26 radiale Rippen 50 aufweist. Im Beispiel ist das Ventilelement 24 mit drei Rippen 50 versehen. Der Grundkörper 26 ist am äußeren Rand einteilig mit einem kreiszylindrischen Trägerkörper 30 verbunden, der beispielsweise ein Trinkhalm ist. Die Rippen 50 erstrecken sich vom äußeren Rand des Grundkörpers 26 und von der Innenseite des Trägerkörpers 30 aus radial zum Zentrum des Grundkörpers 26. Im Beispiel nimmt die Höhe jeder Rippe 50 zum Zentrum hin ab. Die Rippen 50 enden in einem Abstand von der Durchgangsöffnung 27. Sie sind senkrecht oder in einem Winkel zu dem jeweils benachbarten Rand 35, 36 der Durchgangsöffnung 27 ausgerichtet.

Das Ventilelement 24 ist in einen Halter 18 mit einem kreiszylindrischen Querschnitt einsetzbar, wie in Figur 4 gezeigt. Hierdurch wird die Durchgangsöffnung 27 geschlossen. Hierbei bewirken die Rippen 50 eine vorteilhafte Übertragung der auf den äußeren Rand des Grundkörpers 26 wirkenden Klemmkraft auf die Ränder 35, 36 der Durchgangsöffnung 27, sodass die Durchgangsöffnung 27 besonders dicht geschlossen wird. Alternativ ist das Ventilelement 24 mit seiner Aufnahme unterhalb des Grundkörpers 26 außen auf einen Halter 18 aufschiebbar, wie in Fig. 1 gezeigt.

Diese Variante eines Ventilelements 27 dient zum Schließen eines Durchgangskanals für Flüssigkeit (im Trinkaufsatz 3). Es kann auch zum Schließen von Belüftungsöffnungen von Trinkaufsätzen verwendet werden.

### Bezugszeichenliste

- 1: Trinkbehälter
- 2: Trinkgefäß
- 3: Trinkaufsatz
- 4: Schraubring
- 5: Flaschenkörper
- 6: Flaschenboden
- 7: Flaschenseitenwand
- 8: Schulter
- 9: Flaschenhals
- 10: Gefäßöffnung
- 11: Öffnungsrang
- 12: Außengewinde
- 13: Innenraum
- 14: Ringflansch
- 15: Bodenwand
- 16: Mundstück
- 17: Trinköffnung
- 18: Halter
- 19: weiterer Halter
- 20: Belüftungsloch
- 21: Außenstufe
- 22: Außenstufe
- 23: Durchgangskanal
- 24: Ventilelement
- 25: weiteres Ventilelement
- 26: Grundkörper
- 27: Durchgangsöffnung
- 28: Grundkörper
- 29: Durchgangsöffnung
- 30: Trägerkörper
- 31: weiterer Trägerkörper
- 32: Lasche
- 33: Versteifungsrippe
- 34: Greifrippe
- 35, 36: Ränder
- 37, 38: weitere Ränder
- 39: Ventilanordnung
- 40: Trinkhalm
- 41: Konus
- 42: Dichtabschnitt
- 43: Belüftungsöffnungen
- 44: mittlerer Abschnitt
- 45: Flansch
- 46: Vorsprung
- 47: oberer Abschnitt
- 48: Röhrchen
- 49: Aufweitung
- 50: Rippe

## Patentansprüche

1. Trinkbehälter umfassend
• ein Trinkgefäß (2), das einen Innenraum (13) und einen Gefäßhals (9) mit einer Gefäßöffnung (10) aufweist,
• einen Trinkaufsatz (3), der eine Bodenwand (15), mindestens einen Durchgangskanal (23) mit einer Öffnung zum Innenraum (13) und einer Öffnung (17) zur Umgebung, einen Ventilsitz (18) und Halteeinrichtungen (4) zum lösbaren Halten des Trinkaufsatzes (3) am Trinkgefäß (2) aufweist,
• einen an dem Ventilsitz (18) gehaltenes Ventilelement (24) aus weichelastischem Material, das einen den Durchgangskanal (23) versperrenden, plattenförmigen Grundkörper (26) aufweist, in dem eine Durchgangsöffnung (27) vorhanden ist, **dadurch gekennzeichnet, dass** die Durchgangsöffnung (27) im unverformten Zustand des Grundkörpers (26) geöffnet ist, und dass
• eine Klemmeinrichtung (18) mit mindestens einer zum plattenförmigen Grundkörper (26) senkrechten Klemmfläche, die auf den äußeren Rand des plattenförmigen Grundkörpers (26) eine die Durchgangsöffnung (27) schließende Klemmkraft ausübt.

2. Trinkbehälter nach Anspruch 1, bei dem die Klemmeinrichtung (18) eine Klemmfläche mit einer kreisrunden Kontur und das Ventilelement (24) einen äußeren Rand mit einer von einer kreisrunden Kontur abweichenden Kontur aufweist.

3. Trinkbehälter nach Anspruch 1 oder 2, bei dem der Grundkörper (26) einen äußeren Rand mit einer ovalen Kontur aufweist.

4. Trinkbehälter nach Anspruch 3, bei dem die Durchgangsöffnung (27) eine Hauptausdehnungsrichtung senkrecht zur Hauptausdehnungsrichtung der ovalen Kontur aufweist.

5. Trinkbehälter nach einem der Ansprüche 1 bis 4, bei dem die Durchgangsöffnung (27) im unverformten Zustand des Grundkörpers (26) linsenförmig ist.

6. Trinkbehälter nach einem der Ansprüche 1 bis 5, bei dem die Ränder (35, 36) der Durchgangsöffnung (27) Konturen aufweisen, die bei geöffneter Durchgangsöffnung (27) bezüglich der Mittelebene des Grundkörpers (26) geneigt sind und sich bei geschlossener Durchgangsöffnung (27) aneinander abstützen, sodass sich der Grundkörper (26) auf eine Seite der Mittelebene ausbiegt.

7. Trinkbehälter nach einem der Ansprüche 1 bis 6, bei dem das Ventilelement (24) einen röhrchenförmigen Trägerkörper (30) aufweist, dessen Durchgang von dem plattenförmigen Grundkörper (26) versperrt ist.

8. Trinkbehälter nach einem der Ansprüche 1 bis 7, bei dem der Ventilsitz ein röhrchenförmiger Halter (18) an der Unterseite der Bodenwand (15) ist, auf den das Ventilelement (24) aufgeklemmt oder in den das Ventilelement (24) eingeklemmt ist.

9. Trinkbehälter nach Anspruch 7 oder 8, bei dem die Klemmeinrichtung eine Spanneinrichtung ist, wobei die Spanneinrichtung ein Röhrchen ist, das in den Trägerkörper (30) eingeklemmt oder auf diesen aufgeklemmt ist.

10. Trinkbehälter nach Anspruch 8 oder 9, bei dem der Trinkaufsatz (3) eine Trinkhilfe mit einem eine Trinköffnung (17) aufweisenden Mundstück (16) auf der Außenseite der Bodenwand (15) und einem kommunizierend mit dem Mundstück (16) verbundenen, röhrchenförmigen Halter (18) auf der Innenseite der Bodenwand (15) und einem topfförmigen Ventilelement (24) ist, bei dem der Trägerkörper (30) die Seitenwand und der Grundkörper (26) den Boden bildet und das auf das von der Bodenwand (15) entfernte Ende des Halters (18) aufgeklemmt oder in dieses eingeklemmt ist.

11. Trinkbehälter nach Anspruch 10, bei dem auf der Innenseite der Bodenwand (15) ein weiterer röhrchenförmiger Halter (19) vorhanden ist, der mit einem Belüftungsloch (20) in der Außenseite der Bodenwand (15) kommunizierend verbunden ist und ein weiteres topfförmiges Ventilelement (25), bei dem ein weiterer Trägerkörper (32) die Seitenwand und ein weiterer Grundkörper (29) den Boden bildet, auf den weiteren Halter (19) aufgeklemmt oder in diesen eingeklemmt ist.

12. Trinkbehälter nach Anspruch 10 und 11, bei dem das Ventilelement (24) und das weitere Ventilelement (25) einteilig über eine Lasche (32) miteinander verbunden sind.

13. Trinkbehälter nach Anspruch 12, bei dem die Lasche (32) auf der Oberseite eine Versteifungsrippe (33) und/oder auf der Unterseite eine Greifrippe (34) aufweist.

14. Trinkbehälter nach Anspruch 9, bei dem ein mittlerer Abschnitt (44) eines Trinkhalmes (40) den Trägerkörper (30) aufweist und die Spanneinrichtung ein röhrchenförmiger Halter (18) an der Oberseite der Bodenwand (15) ist, in den der mittlere Abschnitt (44) des Trinkhalmes (40) eingesetzt ist, wobei ein unterer Abschnitt (48) des Trinkhalmes in den Innenraum (13) des Trinkgefäßes (2) hinein vorsteht und ein oberer Abschnitt (47) des Trinkhalmes (40) auf der Außenseite des Trinkaufsatzes (3) nach außen vorsteht.

15. Trinkbehälter nach Anspruch 14, bei dem der Trinkhalm (40) am unteren Ende eine Aufweitung (49) aufweist, in die oder auf die ein Röhrchen (48) eingeklemmt oder aufgeklemmt ist, das den unteren Abschnitt (48) des Trinkhalmes bildet.

16. Trinkbehälter nach einem der Ansprüche 1 bis 9, bei dem ein mittlerer Abschnitt (44) eines Trinkhalmes (40) den Trägerkörper aufweist, der in einem röhrchenförmigen Halter (18) gehalten ist, und die Spanneinrichtung ein Röhrchen ist, das auf den mittleren Abschnitt (44) aufgeklemmt ist und einen unteren Abschnitt des Trinkhalmes (40) bildet, der in den Innenraum (13) vorsteht, und dem ein oberer Abschnitt (47) des Trinkhalmes (40) nach außen vom Trinkaufsatz (3) vorsteht.

17. Trinkbehälter nach einem der Ansprüche 14 bis 16, bei dem der röhrchenförmige Halter unten mit einem nach oben sich erweiternden Dichtabschnitt (42) des Trinkaufsatzes (3) verbunden ist und der Trinkhalm (40) einen nach oben sich erweiternden Flansch (45) und in einem Abstand und in einem Abstand oberhalb des Flansches (45) einen umlaufenden Vorsprung (46) aufweist, wobei der Flansch (45) im Einbauzustand des Trinkhalmes abdichtend an der Unterseite des Dichtabschnittes (42) anliegt und der Vorsprung (46) sich am oberen Rand des Halters (18) abstützt.

18. Trinkbehälter nach Anspruch 17, bei dem der Dichtabschnitt (42) mindestens eine Belüftungsöffnung (43) aufweist, die sich von der Außenseite der Bodenwand (15) bis zur Innenseite der Bodenwand erstreckt und die von dem Flansch (45) abgedeckt ist, wenn im Innenraum (13) kein Unterdruck herrscht und die vom Flansch (45) freigegeben wird, wenn im Innenraum ein Unterdruck herrscht.

## Claims

1. A drinking container comprising
a drinking vessel (2) having an interior (13) and vessel neck (9) with a vessel opening (10),
a drinking lid (3) which has a bottom wall (15), at least one through-channel (23) with an opening to the interior (13) and an opening to the surroundings, a valve seat (18) and holding devices (4) for releasably holding the drinking lid (3) on the drinking vessel (2),
a valve element (24) that is held on the valve seat (18) and consists of soft elastic material and has a plate-shaped main body (26), which blocks the through-channel (23), and in which is formed a passage (27), **characterized in that** the passage (27) is open when the main body (26) is in an undeformed state, and **in that** the container comprises a clamping device (18) with at least one clamping surface that is perpendicular to the plate-shaped main body (26) and exerts a clamping force on the outer edge of the plate-shaped main body (26) which closes the passage (27).

2. The drinking container according to claim 1, wherein the clamping device (18) has a clamping surface with a circular contour, and the valve element (24) has an outer edge with a contour distinct from the circular contour.

3. The drinking container according to claim 1 or 2, wherein the main body (26) has an outer edge with an oval contour.

4. The drinking container according to claim 3, wherein the passage (27) has a main direction of extension perpendicular to the main direction of extension of the oval contour.

5. The drinking container according to any one of claims 1 to 4, wherein the passage (27) is lens-shaped when the main body (26) is in an undeformed state.

6. The drinking container according to any one of claims 1 to 5, wherein the edges (35, 36) of the passage (27) have contours which are oblique relative to the mid-plane of the main body (26) when the passage (27) is open, and abut each other when the passage (27) is closed so that the main body (26) bends out to one side of the mid-plane.

7. The drinking container according to any one of claims 1 to 6, wherein the valve element (24) has a tubular support body (30), the passage of which is blocked by the plate-shaped main body (26).

8. The drinking container according to any one of claims 1 to 7, wherein the valve seat is a tubular holder (18) on the bottom side of the bottom wall (15) onto which the valve element (24) is clamped, or in which the valve element (24) is clamped.

9. The drinking container according to claim 7 or 8, wherein the clamping device is a tube (48) that is clamped in the support body (30) or is clamped thereupon.

10. The drinking container according to claim 8 or 9, wherein the drinking lid (3) is a drinking aid with a mouthpiece (16) having a drinking opening (17) on the outside of the bottom wall (15), and a tubular holder (18) connected so as to communicate with the mouthpiece (16) on the inside of the bottom wall (15), and a pot-shaped valve element (24), wherein the support body (30) forms the side wall and the main body (26) forms the bottom, and the end of the holder (18) distant from the bottom wall (15) is clamped thereupon or therein.

11. The drinking container according to claim 10, wherein another tubular holder (19) is on the inside of the bottom wall (15) and is connected so as to communicate with a ventilation hole (20) in the outside of the bottom wall (15), and another pot-shaped valve element (25), wherein the additional support body (32) forms the side wall and the additional main body forms the bottom (29), is clamped onto or in the additional holder (19).

12. The drinking container according to claims 10 and 11, wherein the valve element (24) and the additional valve element (25) are connected to each other as a single part by means of a tab (32).

13. The drinking container according to claim 12, wherein the tab (32) has a reinforcing rib (33) on the top side, and/or a gripping rib (34) on the bottom side.

14. The drinking container according to claim 9, wherein a middle section (44) of a straw (40) comprises the support body (30), and the clamping device is a tubular holder (18) on the bottom side of the bottom wall (15) into which the middle section (44) of the straw (40) is inserted, wherein a bottom section (48) of the straw projects into the interior (13) of the drinking vessel (2), and a top section (47) of the straw (40) projects outward to the outside of the drinking lid (3).

15. The drinking container according to claim 14, wherein the straw (40) has an expansion (49) on the bottom end in which or on which a tube (48) is clamped which forms the bottom section of the straw.

16. The drinking container according to any one of claim 1 to 9, wherein a middle section (44) of a straw (40) has the support body (30) which is held in a tubular holder (18), and the clamping device is a tube (48) which is clamped in the middle section (44) or onto the middle section and forms a bottom section of the straw (40) which projects into the interior (13), and a top section (47) of the straw (40) projects outward from the drinking lid (3).

17. The drinking container according to any one of claims 14 to 16, wherein the tubular holder (30) is connected at the bottom to an upwardly expanding sealing section (42) of the drinking lid (3), and the straw (40) has an upwardly expanding flange (45) and a peripheral projection (46) at a distance above the flange (45), wherein the flange (45), when the straw is an installed state, sealingly lies against the bottom side of the sealing section (42), and the projection (46) abuts the top edge of the holder (18).

18. The drinking container according to claim 17, wherein the sealing section (42) has a least one ventilation opening (43) that extends from the outside of the bottom wall (15) to the inside of the bottom wall, and is covered by the flange (45) when a negative pressure is stablished in the interior (13), and is released by the flange (45) when a negative pressure is established in the interior.

## Revendications

1. Contenant à boisson comportant
• un récipient à boisson (2), qui comprend un espace intérieur (13) et un col de récipient (9) présentant une ouverture de récipient (10),
• un couvercle de boisson (3), qui comprend une paroi de fond (15), au moins un canal de passage (23) présentant une ouverture menant à l'espace intérieur (13) et une ouverture (17) menant à l'environnement, un siège de soupape (18) et des dispositifs de retenue (4) permettant de retenir le couvercle de boisson (3) de manière amovible sur le récipient à boisson (2),
• un élément de soupape (24) fait d'un matériau élastique souple qui est retenu sur le siège de soupape (18), qui comprend un corps de base (26) en forme de plaque qui obstrue le canal de passage (23), corps dans lequel une ouverture de passage (27) est ménagée,
**caractérisé en ce que** l'ouverture de passage (27), dans l'état non déformé du corps de base (26), est ouverte, et **en ce que** le contenant comprend
• un dispositif de serrage (18) comprenant au moins une surface de serrage perpendiculaire au corps de base (26) en forme de plaque, qui exerce une force de serrage fermant l'ouverture de passage (27) sur le bord extérieur du corps de base en forme de plaque (26).

2. Contenant à boisson selon la revendication 1, dans lequel le dispositif de serrage (18) comprend une surface de serrage présentant un contour circulaire et l'élément de soupape (24) comprend un bord extérieur présentant un contour différent du contour circulaire.

3. Contenant à boisson selon la revendication 1 ou 2, dans lequel le corps de base (26) comprend un bord extérieur présentant un contour ovale.

4. Contenant à boisson selon la revendication 3, dans lequel l'ouverture de passage (27) présente une direction d'étendue principale perpendiculaire à la direction d'étendue principale du contour ovale.

5. Contenant à boisson selon l'une quelconque des revendications 1 à 4, dans lequel l'ouverture de passage (27), dans l'état non déformé du corps de base (25), est lenticulaire.

6. Contenant à boisson selon l'une quelconque des revendications 1 à 5, dans lequel les bords (35, 36) de l'ouverture de passage (27) comprennent des contours qui, lorsque l'ouverture de passage (27) est ouverte, sont inclinés par rapport au plan central du corps de base (26) et qui, lorsque l'ouverture de passage (27) est fermée, s'appuient les uns contre les autres, de sorte que le corps de base (26) se courbe vers un côté du plan central.

7. Contenant à boisson selon l'une quelconque des revendications 1 à 6, dans lequel l'élément de soupape (24) comprend un corps de support (30) en forme de petit tube, dont le passage est obturé par le corps de base (26) en forme de plaque.

8. Contenant à boisson selon l'une quelconque des revendications 1 à 7, dans lequel le siège de soupape est un support (18) en forme de petit tube sur la face inférieure de la paroi de fond (15), sur lequel l'élément de soupape (24) est serré ou dans lequel l'élément de soupape (24) est serré.

9. Contenant à boisson selon la revendication 7 ou 8, dans lequel le dispositif de serrage est un dispositif tendeur, dans lequel le dispositif tendeur est un petit tube qui est serré dans le corps de support (30) ou serré sur celui-ci.

10. Contenant à boisson selon la revendication 8 ou 9, dans lequel le couvercle de boisson (3) est un dispositif d'aide à la consommation d'une boisson comprenant un bec (16) présentant une ouverture de consommation (17) sur la face extérieure de la paroi de fond (15) et un support (18) en forme de petit tube, relié au bec (16) de manière à communiquer avec celui-ci sur la face intérieure de la paroi de fond (15) et un élément de soupape (24) en forme de pot, dans lequel le corps de support (30) forme la paroi latérale et le corps de base (26) forme le fond et l'extrémité du support (18) éloignée de la paroi de fond (15) est serrée sur celui-ci ou serrée dans celui-ci.

11. Contenant à boisson selon la revendication 10, dans lequel un autre support (19) en forme de petit tube, qui est relié à un trou de ventilation (20) dans la face extérieure de la paroi de fond (15) de manière à communiquer avec lui, est présent sur la face intérieure de la paroi de fond (15), et un autre élément de soupape (25) en forme de pot, dans lequel un autre corps de support (32) forme la paroi latérale et un autre corps de base (29) forme le fond, est serré sur l'autre support (19) ou serré dans celui-ci.

12. Contenant à boisson selon les revendications 10 et 11, dans lequel l'élément de soupape (24) et l'autre élément de soupape (25) sont reliés d'une seule pièce par l'intermédiaire d'une languette (32).

13. Contenant à boisson selon la revendication 12, dans lequel la languette (32) comprend une nervure de renforcement (33) sur la face supérieure et/ou une nervure de préhension (34) sur la face inférieure.

14. Contenant à boisson selon la revendication 9, dans lequel une partie centrale (44) d'une paille (40) comprend le corps de support (30) et le dispositif tendeur est un support (18) en forme de petit tube sur la face supérieure de la paroi de fond (15), dans laquelle la partie centrale (44) de la paille (40) est insérée, dans lequel une partie inférieure (48) de la paille fait saillie dans l'espace intérieur (13) du récipient à boisson (2) et une partie supérieure (47) de la paille (40) sur la face extérieure du couvercle de boisson (3) fait saillie vers l'extérieur.

15. Contenant à boisson selon la revendication 14, dans lequel la paille (40) présente à l'extrémité inférieure un élargissement (49) dans lequel ou sur lequel est serré un petit tube (48) qui forme la partie inférieure (48) de la paille.

16. Contenant à boisson selon l'une quelconque des revendications 1 à 9, dans lequel une partie centrale (44) d'une paille (40) comprend le corps de support qui est retenu dans un support (18) en forme de petit tube, et le dispositif tendeur est un petit tube qui est serré sur la partie centrale (44) et qui forme une partie inférieure de la paille (40) qui fait saillie dans l'espace intérieur (13), et une partie supérieure (47) de la paille (40) qui fait saillie vers l'extérieur du couvercle de boisson (3).

17. Contenant à boisson selon l'une quelconque des revendications 14 à 16, dans lequel le support en forme de petit tube est relié en bas à une partie d'étanchéité (42) du couvercle de boisson (3) s'élargissant vers le haut, et la paille (40) comprend un rebord (45) s'élargissant vers le haut et, à une certaine distance au-dessus du rebord (45), une partie saillante circulaire (46), dans lequel le rebord (45), une fois la paille installée, s'applique de manière étanche contre la face inférieure de la partie d'étanchéité (42) et la partie saillante (46) s'appuie contre le bord supérieur du support (18).

18. Contenant à boisson selon la revendication 17, dans lequel la partie d'étanchéité (42) comprend au moins une ouverture de ventilation (43) qui s'étend de la face extérieure de la paroi de fond (15) jusqu'à la face intérieure de la paroi de fond, et qui est recouverte par le rebord (45) lorsqu'aucune dépression ne règne dans l'espace intérieur (13) et qui est dégagée du rebord (45) lorsqu'une dépression règne dans l'espace intérieur.
